# FASCICULE DE BREVET EUROPEEN

(11) **EP 3 002 169 B1**
(45) Date de publication et mention de la délivrance du brevet: **30.10.2019**
(21) Numéro de dépôt: 15186200.0
(22) Date de dépôt: 22.09.2015
(51) Int. Cl.: B60S 1/52, B60S 1/08

(54) **BALAI D'ESSUIE-GLACE, SYSTÈME ET PROCÉDÉ D'ESSUYAGE D'UNE SURFACE VITRÉE DE VÉHICULE AUTOMOBILE**
SCHEIBENWISCHERARM, REINIGUNGSSYSTEM UND -VERFAHREN EINER GLASOBERFLÄCHE EINES KRAFTFAHRZEUGS
WINDSCREEN-WIPER BLADE, SYSTEM AND METHOD FOR WIPING A GLASS SURFACE OF A MOTOR VEHICLE

(30) Priorité: 02.10.2014 FR 1459404
(43) Date de publication de la demande: 06.04.2016
(73) Titulaire: Valeo Systèmes d'Essuyage, 78322 Le Mesnil Saint Denis (FR)
(72) Inventeur: GIRAUD, Frédéric, 78610 LE PERRAY EN YVELINES (FR); TREBOUET, Marcel, 78450 CHAVENAY (FR); THEBAULT, Denis, 63000 Clermont Ferrand (FR)
(74) Mandataire: Vincent, Catherine Marie Marguerite

(56) Documents cités:
- WO-A1-2013/080997
- DE-A1-102013 003 729
- DE-A1-102013 204 418
- FR-A1- 2 991 948
- US-A1- 2008 155 776
- US-A1- 2013 152 320

## Description

La présente invention se rapporte à un balai d'essuie-glace, un système d'essuyage et un procédé d'essuyage d'une surface vitrée de véhicule automobile.

Les automobiles sont couramment équipées d'installations d'essuyage et de systèmes de lavage pour assurer un essuyage et un lavage du pare-brise et éviter que la vision qu'a le conducteur de son environnement ne soit perturbée. Une telle installation comprend généralement deux balais d'essuyage qui raclent la surface extérieure du pare-brise de manière à évacuer l'eau présente sur cette surface. Le système de lavage comprend un ou plusieurs gicleurs, agencés dans le capot ou sur les bras des essuie-glaces, permettant de projeter un liquide de lavage sur le pare-brise.

Les véhicules sont également de plus en plus généralement équipés de capteurs qui analysent l'état du pare-brise ou l'état de la route. Il peut ainsi s'agir d'un détecteur de pluie ou d'un capteur d'ensoleillement, de brouillard, de salissures ou un capteur de panneaux signalétiques. Ces capteurs peuvent comporter un appareil photographique ou une ou plusieurs caméras.

Ces capteurs assistent le conducteur à la conduite, par exemple en alertant le conducteur en cas de danger ou en participant au déclenchement automatique d'une fonction du véhicule (avertissement automatique de déclenchement de freinage, déclenchement automatique des essuie-glaces dans le cas de la visualisation de gouttes d'eau sur le pare-brise, contrôle de certaines fonctions des projecteurs, etc...) ou améliorent simplement la visibilité du conducteur.

De tels capteurs sont en général installés au niveau d'une partie supérieure du pare-brise. Leur bon fonctionnement est conditionné par l'état de propreté de cette zone du pare-brise. Il est donc nécessaire de procéder à un nettoyage efficace et régulier de cette zone.

Un inconvénient est que le gicleur de capot du système de lavage est disposé loin de la partie supérieure du pare-brise. De fait, le gicleur peut ne pas projeter suffisamment de liquide lave-glace dans la zone du pare-brise derrière laquelle le capteur est installé. De même, lorsque les gicleurs sont agencés sur les bras d'essuie-glaces, ceux-ci peuvent également ne pas donner entièrement satisfaction en particulier à grande vitesse, car le flux d'air tend à entraîner le liquide lave-glace au-dessus du pavillon, l'empêchant ainsi d'atteindre la zone supérieure du pare-brise.

De cela découle que le nettoyage de la zone du pare-brise à l'arrière de laquelle le capteur est placé peut ne pas être assuré suffisamment efficacement, ce qui peut conduire à des erreurs de détection du capteur qui peuvent provoquer des alertes ou mises en fonctionnement erronées. WO-A-2013/080997 montre le préambule de la revendication 1.

La présente invention se propose de remédier au moins partiellement aux inconvénients ci-dessus mentionnés en présentant un balai d'essuie-glace, un système d'essuyage et un procédé d'essuyage d'une vitre de véhicule permettant le nettoyage particulier d'une zone de pare-brise derrière laquelle se trouve un capteur.

A cet effet, l'invention a pour objet un balai d'essuie-glace pour système d'essuyage d'une surface vitrée de véhicule automobile, destiné à être entrainé en pivotement par un bras d'actionnement d'un système d'essuyage, caractérisé en ce qu'il comporte au moins un orifice d'arrosage dédié configuré pour projeter du fluide de lavage sur une zone prédéterminée de la surface vitrée à l'arrière de laquelle un capteur est agencé, ledit orifice d'arrosage dédié étant agencé au niveau d'une portion du balai d'essuie-glace balayant ladite zone prédéterminée de la surface vitrée, et formant une densité d'orifices d'arrosage plus importante au niveau de ladite portion du balai d'essuie-glace que sur le reste du balai d'essuie-glace et/ou présentant une section d'ouverture plus importante que les orifices d'arrosage situés en dehors de la zone prédéterminée.

La zone prédéterminée de la surface vitrée derrière laquelle le capteur est agencé peut ainsi être nettoyée efficacement par le fluide de lavage projeté par le(s) orifice(s) d'arrosage dédié(s). Cela permet aux dispositifs du véhicule automobile utilisant les données issues du capteur, tels que les logiciels de systèmes avancés d'assistance au conducteur utilisant les images issues de caméras, de fonctionner correctement. On est en outre assuré que ladite zone prédéterminée soit essuyée après avoir été arrosée.

Selon une ou plusieurs caractéristiques du balai d'essuie-glace, prise seule ou en combinaison :
- le au moins un orifice d'arrosage dédié est configuré pour projeter un fluide de lavage sur ladite zone prédéterminée en amont et/ou en aval du balai d'essuie-glace lorsque le balai d'essuie-glace est entraîné en pivotement,
- le balai d'essuie-glace comporte au moins une rampe d'arrosage comportant une pluralité d'orifices d'arrosage s'étendant selon le long de l'axe longitudinal du balai d'essuie-glace. Une quantité plus importante de fluide de lavage est ainsi projetée sur la zone prédéterminée que sur le reste de la surface vitrée au cours d'un cycle de balayage.
- Selon l'invention, le au moins un orifice d'arrosage dédié agencé dans ladite portion du balai d'essuie-glace balayant ladite zone prédéterminée est situé sur le côté opposé du côté du balai d'essuie-glace sur lequel est ménagé au moins un orifice d'arrosage destiné à projeter du fluide de lavage sur la surface vitrée. Avec des canaux de fluide de lavage distincts pour approvisionner d'une part, le(s) orifice(s) d'arrosage dédié(s) et d'autre part, les orifices d'arrosage de la surface vitrée, on limite la quantité de fluide de lavage projeté pour le nettoyage de la zone prédéterminée.

L'invention a aussi pour objet un système d'essuyage d'une surface vitrée de véhicule automobile, comprenant au moins un bras d'actionnement destiné à entraîner un balai d'essuie-glace en pivotement, une surface vitrée et un capteur, caractérisé en ce qu'il comporte un balai tel que décrit précédemment.

Selon une ou plusieurs caractéristiques du système d'essuyage prise seule ou en combinaison,
- le système d'essuyage comporte un dispositif de commande du fluide de lavage configuré pour projeter du fluide de lavage par le au moins un orifice d'arrosage dédié en fonction du sens de pivotement ou de la position angulaire du balai d'essuie-glace ou du bras d'actionnement. On économise ainsi le fluide de lavage, ce qui permet de réduire les dimensions du réservoir et donc le poids du véhicule.
- le système d'essuyage comporte un dispositif de commande du pivotement des balais d'essuie-glace configuré pour piloter au moins un balayage aller-retour additionnel de la zone prédéterminée au cours d'un cycle de balayage aller-retour de la surface vitrée. Ce balayage aller-retour additionnel de la zone prédéterminée permet d'augmenter la quantité de fluide de lavage projetée sur la zone prédéterminée de la surface vitrée et son essuyage par rapport au reste de la surface vitrée.

L'invention a encore pour objet un système d'essuyage d'une surface vitrée de véhicule automobile, comprenant au moins un bras d'actionnement, une surface vitrée et un capteur, caractérisé en ce qu'il comporte un balai d'essuie-glace tel que décrit précédemment, entrainé en pivotement par le bras d'actionnement.

Selon une ou plusieurs caractéristiques du système d'essuyage prise seule ou en combinaison,
- le système d'essuyage comporte un dispositif de commande du fluide de lavage configuré pour projeter du fluide de lavage par le au moins un orifice d'arrosage dédié en fonction du sens de pivotement ou de la position angulaire du balai d'essuie-glace ou du bras d'actionnement.
- Le système d'essuyage comporte un dispositif de commande du pivotement des balais d'essuie-glace configuré pour piloter au moins un balayage aller-retour additionnel de la zone prédéterminée au cours d'un cycle de balayage aller-retour de la surface vitrée.

L'invention a aussi pour objet un procédé d'essuyage d'une surface vitrée de véhicule automobile par balai d'essuie-glace, caractérisé en ce qu'on projette par au moins un orifice d'arrosage dédié, un fluide de lavage sur une zone prédéterminée de la surface vitrée à l'arrière de laquelle un capteur est agencé depuis un système d'essuyage tel que décrit précédemment.

Selon une ou plusieurs caractéristiques du procédé d'essuyage prise seule ou en combinaison,
- le fluide de lavage est projeté par le au moins un orifice d'arrosage dédié seulement au cours d'une portion du cycle de balayage aller-retour de la surface vitrée,
- le fluide de lavage est projeté par le au moins un orifice d'arrosage dédié, seulement lorsque les balais d'essuie-glace balaient la zone prédéterminée,
- le fluide de lavage est projeté par le au moins un orifice d'arrosage dédié seulement au cours des phases montantes ou descendantes du balayage,
- un cycle de balayage aller-retour de la surface vitrée comporte au moins un balayage aller-retour additionnel de la zone prédéterminée,
- au cours du cycle de balayage aller-retour de la surface vitrée, le fluide de lavage est projeté par le au moins un orifice d'arrosage dédié seulement sur un côté du balai d'essuie-glace en phase montante et seulement sur le côté opposé en phase descendante, le au moins un orifice d'arrosage dédié étant agencé sur le côté opposé.

D'autres avantages et caractéristiques apparaîtront à la lecture de la description de l'invention, ainsi que des dessins annexés sur lesquels :
- la figure 1 représente une vue schématique d'un premier exemple non revendiqué d'un système d'essuyage d'une surface vitrée de véhicule automobile,
- la figure 2 illustre une position du balai d'essuie-glace successive à la figure 1 au cours d'un balayage de la surface vitrée en phase montante du balayage,
- la figure 3 illustre une position du balai d'essuie-glace successive à la figure 2,
- la figure 4 illustre une position du balai d'essuie-glace successive à la figure 3,
- la figure 5 illustre une position du balai d'essuie-glace successive à la figure 4,
- la figure 6 illustre une position du balai d'essuie-glace successive à la figure 5,
- la figure 7 illustre une position du balai d'essuie-glace successive à la figure 6 illustrant une variante de réalisation du procédé d'essuyage,
- la figure 8 illustre une position du balai d'essuie-glace successive à la figure 7,
- la figure 9 illustre une position du balai d'essuie-glace successive à la figure 8,
- la figure 10 illustre une position du balai d'essuie-glace successive à la figure 9,
- la figure 11 illustre une position du balai d'essuie-glace au cours d'un balayage de la surface vitrée en phase descendante du balayage, selon une variante de réalisation du procédé d'essuyage,
- la figure 12 illustre une position du balai d'essuie-glace successive à la figure 11,
- la figure 13 illustre une position du balai d'essuie-glace au cours d'un balayage de la surface vitrée en phase descendante du balayage, selon une variante de réalisation du procédé d'essuyage,
- la figure 14 illustre une position du balai d'essuie-glace successive à la figure 13, en phase montante,
- la figure 15 illustre une position du balai d'essuie-glace successive à la figure 14, en phase montante,
- la figure 16 illustre une position du balai d'essuie-glace successive à la figure 15, en phase montante,
- la figure 17 représente une vue schématique d'un autre exemple non revendiqué d'un système d'essuyage, et
- la figure 18 représente une vue schématique d'un autre exemple non revendiqué d'un système d'essuyage.

Sur ces figures, les éléments identiques portent les mêmes numéros de référence.

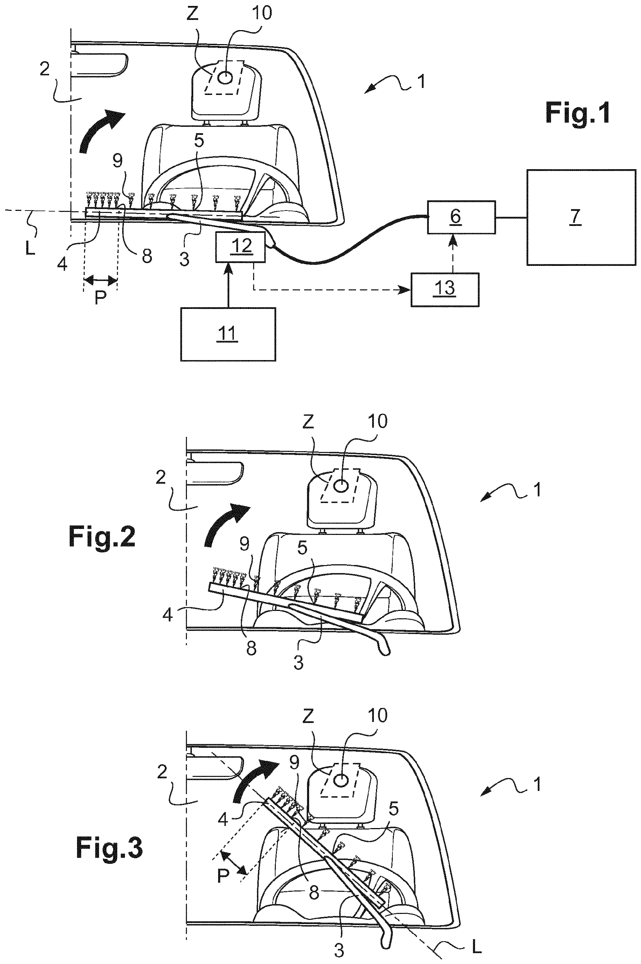

La figure 1 représente un système d'essuyage 1 d'une surface vitrée 2 de véhicule automobile, telle que le pare-brise.

Le système d'essuyage 1 comporte au moins un bras d'actionnement 3 destiné à entraîner un balai d'essuie-glace 4 respectif en pivotement pour racler la surface extérieure de la surface vitrée 2 suivant une succession de cycle de balayage aller-retour.

Selon un premier exemple non revendiqué visible sur la figure 1, le balai d'essuie-glace 4 comporte un ou plusieurs orifices d'arrosage 5 (ou gicleur) configuré(s) pour projeter un fluide de lavage 9 sur la surface vitrée 2. Le balai 4 comporte par exemple une ou deux rampes d'arrosage comprenant respectivement une pluralité d'orifices d'arrosage 5 s'étendant selon le long de l'axe longitudinal L du balai d'essuie-glace 4. Les orifices d'arrosage 5 sont hydrauliquement raccordés à une pompe de fluide de lavage 6 du véhicule automobile, elle-même raccordée à un réservoir 7.

Le balai d'essuie-glace 4 comporte en outre au moins un orifice d'arrosage dédié 8 configuré pour projeter du fluide de lavage 9 sur la face extérieure de la surface vitrée 2, sur une zone prédéterminée de la surface vitrée 2 à l'arrière de laquelle un capteur 10 est agencé.

La zone prédéterminée Z est par exemple une partie supérieure de la surface vitrée 2 du pare-brise, côté conducteur.

Le capteur 10 est agencé derrière la surface vitrée 2, du côté intérieur du véhicule. Il permet de déterminer l'état du pare-brise ou l'état de la route à l'avant à travers la surface vitrée 2. Il peut ainsi s'agir d'un détecteur de pluie ou d'un capteur d'ensoleillement, de brouillard, de salissures ou un capteur de panneaux signalétiques. Le capteur 10 comporte par exemple un capteur optique tel qu'un appareil photographique ou une caméra dont l'objectif est orienté vers l'avant du véhicule.

Le capteur 10 permet par exemple l'assistance à la conduite, par exemple en alertant le conducteur en cas de danger ou en participant au déclenchement automatique d'une fonction du véhicule (avertissement automatique de déclenchement de freinage, déclenchement automatique des essuie-glaces dans le cas de la visualisation de gouttes d'eau sur le pare-brise, contrôle de certaines fonctions des projecteurs, etc...) ou améliore simplement la visibilité du conducteur.

L'orifice d'arrosage dédié 8 est agencé au niveau d'une portion du balai d'essuie-glace P balayant la zone prédéterminée Z.

Par orifice d'arrosage dédié 8, on entend un orifice qui augmente la densité des orifices d'arrosage au niveau de la portion du balai d'essuie-glace P balayant la zone prédéterminée Z ou un orifice qui présente une section d'ouverture élargie par rapport aux orifices d'arrosage 5 situés en dehors de la portion du balai d'essuie-glace P.

Ainsi, par exemple, si l'écartement des orifices en dehors de la portion P est constant par unité de longueur, un orifice d'arrosage dédié 8 augmente, au moins localement au niveau de la portion du balai d'essuie-glace P, le nombre d'orifices par unité de longueur.

Selon un autre exemple, si aucun autre orifice d'arrosage 5 est ménagé dans le balai en dehors de la portion P, au moins un orifice d'arrosage dédié 8 ménagé dans la portion P augmente, au moins localement au niveau de la portion du balai d'essuie-glace P, la densité des orifices.

Le balai d'essuie-glace 4 peut ainsi comporter un ou plusieurs orifice(s) d'arrosage 5, 8 dans la portion du balai d'essuie-glace P et aucun, un ou plusieurs orifice(s) d'arrosage 5 sur le reste du balai d'essuie-glace 4. La densité d'orifices d'arrosage 5, 8 est ainsi plus importante que sur le reste du balai d'essuie-glace 4.

Ou encore, le balai d'essuie-glace 4 peut comporter au moins un orifice d'arrosage dédié 8 agencé dans la portion du balai d'essuie-glace P balayant la zone prédéterminée Z, présentant une section d'ouverture plus grande que celle des autres orifices d'arrosage 5.

Ainsi, si le nombre d'orifice d'arrosage par unité de longueur est par exemple constant sur la longueur du balai d'essuie-glace 4, au moins un des orifices de la portion du balai d'essuie-glace P balayant la zone prédéterminée Z présente par rapport aux orifices d'arrosage 5 en dehors de la portion P, un diamètre élargi.

La zone prédéterminée Z de la surface vitrée 2 derrière laquelle le capteur 10 est agencé peut ainsi être nettoyée efficacement par le fluide de lavage 9 projeté par le(s) orifice(s) d'arrosage dédié(s) 8. Cela permet aux dispositifs du véhicule automobile utilisant les données issues du capteur 10, tels que les logiciels de systèmes avancés d'assistance au conducteur utilisant les images issues de caméras, de fonctionner correctement. On est en outre assuré que la zone prédéterminée Z soit essuyée après avoir été arrosée.

Dans le premier exemple de réalisation représenté sur les figures 1 à 6, l'orifice d'arrosage dédié 8 est aligné avec les orifices d'arrosage 5 de la rampe d'arrosage.

Lorsque le balai d'essuie-glace 4 est entraîné en pivotement, le fluide de lavage 9 est ainsi projeté par l'orifice d'arrosage dédié 8 sur la zone prédéterminée Z en amont et/ou en aval du balai d'essuie-glace 4.

On prévoit par exemple que le fluide de lavage 9 soit projeté de la même manière par les orifices d'arrosage 5 et l'orifice d'arrosage dédié 8, en phase montante et en phase descendante du balayage. Ainsi, au cours du balayage, le fluide de lavage 9 est plus spécifiquement projeté sur une zone prédéterminée Z de la surface vitrée 2 à l'arrière de laquelle le capteur 10 est agencé.

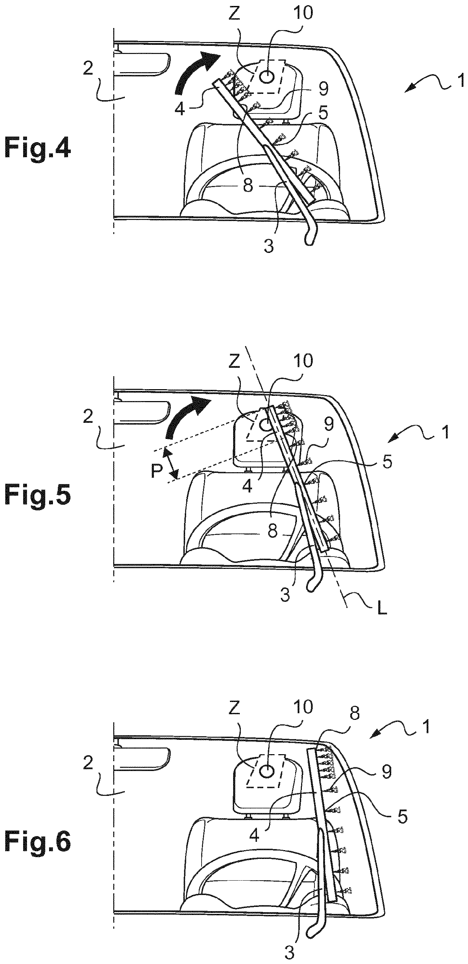

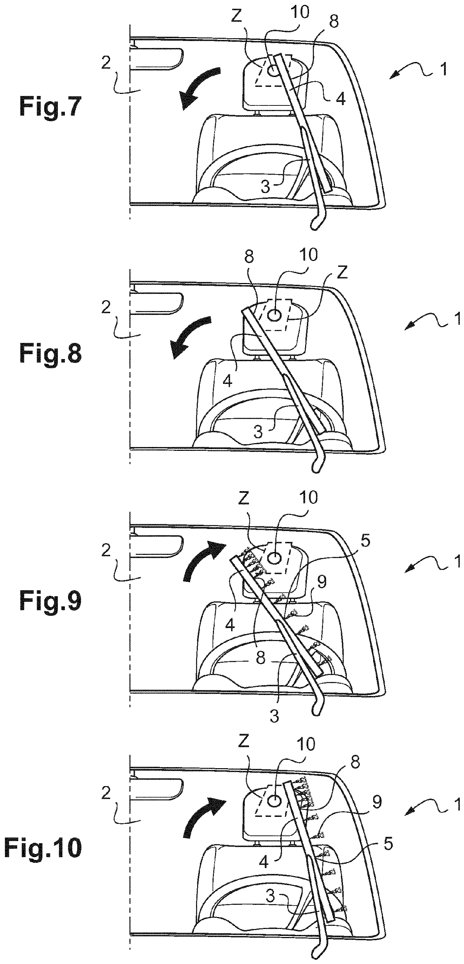

Les figures 7 à 10, successives à la fin de la phase montante du balayage illustrée en figure 6, représentent une première variante de réalisation du procédé d'essuyage.

Dans cette variante, le système d'essuyage 1 comporte un dispositif de commande de pivotement des balais d'essuie-glace 11, configuré pour piloter le moteur 12 des bras d'actionnement 3 pour réaliser au moins un balayage aller-retour additionnel de la zone prédéterminée Z, au cours du cycle de balayage aller-retour.

Ce balayage aller-retour additionnel de la zone prédéterminée Z permet d'augmenter la quantité de fluide de lavage 9 projetée sur la zone prédéterminée Z de la surface vitrée 2 et son essuyage par rapport au reste de la surface vitrée 2.

Pour réduire la consommation de fluide de lavage 9, on peut prévoir que le système d'essuyage 1 comporte un dispositif de commande du fluide de lavage 13, configuré pour commander le déclenchement de la pompe de fluide de lavage 6 de manière à projeter du fluide de lavage 9 par l'orifice d'arrosage dédié 8 en fonction du sens de pivotement ou de la position angulaire du balai d'essuie-glace 4 ou du bras d'actionnement 3. Le fluide de lavage 9 spécifiquement projeté sur la zone prédéterminée Z peut ainsi être projeté seulement au cours d'une portion d'un cycle de balayage aller-retour de la surface vitrée 2.

Par exemple, on prévoit que le fluide de lavage 9 soit seulement projeté par l'orifice d'arrosage dédié 8 au cours des phases montantes du balayage (figures 9 et 10). Le fluide de lavage 9 n'est pas projeté par l'orifice d'arrosage dédié 8 au cours des phases descendantes du balayage (figures 7 et 8). On économise ainsi le fluide de lavage, ce qui permet de réduire les dimensions du réservoir 7 et donc le poids du véhicule.

A l'inverse, on peut prévoir que le fluide de lavage 9 soit seulement projeté par l'orifice d'arrosage dédié 8 au cours des phases descendantes du balayage.

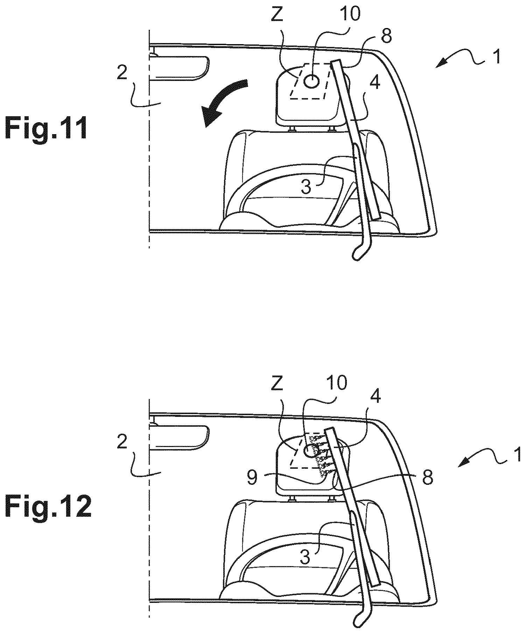

Selon un autre exemple illustré sur les figures 11 et 12, qui représentent deux positions successives du balai d'essuie-glace 4 en phase descendante du balayage, le fluide de lavage 9 est projeté par l'orifice d'arrosage dédié 8 seulement lorsque les balais d'essuie-glace 4 balaient la zone prédéterminée Z, c'est-à-dire lorsqu'ils passent sur la zone de la surface vitrée 2 derrière laquelle le capteur 10 est agencé (figure 12). Le fluide de lavage 9 n'est pas projeté par l'orifice d'arrosage dédié 8 lorsque le balai d'essuie-glace est situé hors de la zone prédéterminée Z (figure 11).

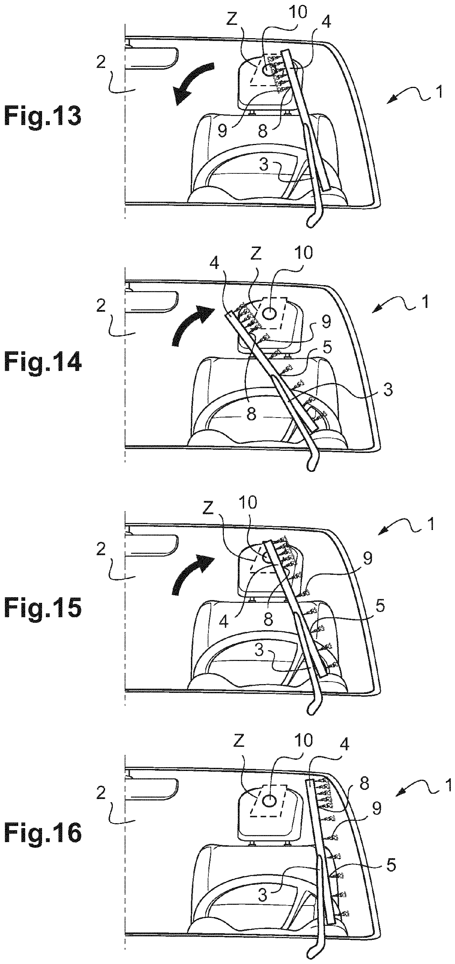

Selon une autre variante de réalisation illustrée par les figures 13 à 16, l'orifice d'arrosage dédié 8 est agencé dans la portion du balai d'essuie-glace P balayant la zone prédéterminée Z, sur le côté opposé du côté du balai d'essuie-glace 4 sur lequel est ménagé au moins un orifice d'arrosage 5 destiné à projeter du fluide de lavage 9 sur la surface vitrée 2.

L'orifice d'arrosage dédié 8 est hydrauliquement raccordé à la pompe de fluide de lavage 6, par exemple par des conduites indépendantes des celles approvisionnant le ou les orifices d'arrosage 5 de la surface vitrée 2 en fluide de lavage. L'orifice d'arrosage dédié 8 et les orifices d'arrosage 5 de la surface vitrée 2 sont ainsi agencés pour projeter le fluide de lavage respectivement de part et d'autre de l'axe longitudinal L du balai d'essuyage 4.

La densité d'orifices d'arrosage 5, 8 est alors plus importante au niveau de la portion P du balai d'essuie-glace 4 balayant la zone prédéterminée Z que sur le reste du balai d'essuie-glace 4.

Ainsi, au cours du balayage, le fluide de lavage 9 peut être projeté seulement sur le côté avant du balai d'essuie-glace 4 en phase montante du balayage (figures 14, 15, 16). Puis en phase descendante, le fluide de lavage 9 est seulement projeté sur le côté avant du balai d'essuie-glace 4 par l'orifice d'arrosage dédié 8, c'est-à-dire sur le côté opposé, spécifiquement sur la zone prédéterminée Z (figure 13).

La dissymétrie entre l'orifice d'arrosage 5 (ou rampe d'arrosage) d'un côté du balai 4 et l'orifice d'arrosage dédié 8 de l'autre côté, permettent qu'une quantité plus importante de fluide de lavage 9 soit projetée sur la zone prédéterminée Z que sur le reste de la surface vitrée 2 au cours d'un cycle de balayage aller-retour de la surface vitrée 2. En outre, la consommation de fluide de lavage 9 est limitée.

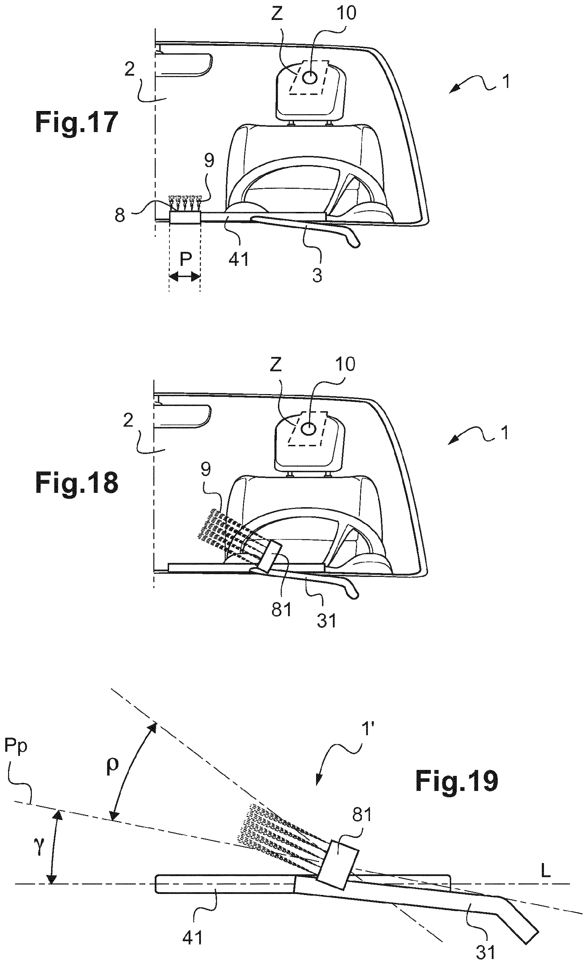

Selon un autre exemple non revendiqué de réalisation du balai représenté en figure 17, le balai d'essuie-glace 41 ne comporte pas d'autres orifices d'arrosage que ceux de l'orifice d'arrosage dédié 8, agencé dans la portion du balai d'essuie-glace P destinée à balayer la zone prédéterminée Z. Il est ainsi dépourvu d'orifices d'arrosage en dehors de l'orifice d'arrosage dédié 8 agencé dans la portion du balai P. Le fluide de lavage 9 est alors uniquement projeté sur une portion du parebrise, ce qui permet d'économiser le fluide de lavage 9. On réduit ainsi les dimensions du réservoir et donc le poids du véhicule.

Au lieu d'être agencé dans le balai d'essuie-glace 4, l'orifice d'arrosage dédié 81, configuré pour projeter un fluide de lavage sur la zone prédéterminée Z, peut être agencé dans le bras d'actionnement 31. L'orifice d'arrosage dédié 81 est par exemple directement intégré au bras d'actionnement 31, en étant par exemple ménagé dans le corps du bras d'actionnement 31 ou peut être agencé dans un élément rapporté distinct du bras, l'élément rapporté étant fixé au corps du bras d'actionnement 31.

Dans ce cas et comme représenté sur les figures 18 et 19, le au moins un orifice d'arrosage dédié 81 est orienté pour que la partie proximale Pp au balai d'essuie-glace 4 du jet de fluide de lavage 9 projeté s'écarte de l'axe longitudinal L du balai d'essuie-glace 4 en faisant un angle γ supérieur à 2°, de préférence à 3°. En outre, on prévoit que le jet de fluide de lavage 9 s'inscrit par exemple dans un cône d'angle au sommet p de l'ordre de 42° au maximum.

En utilisation, l'orifice d'arrosage dédié 81 projette un fluide de lavage 9 en amont et/ou en aval du balai d'essuie-glace 41.

L'orientation particulière de l'orifice d'arrosage dédié 81 permet ainsi de maximiser la quantité de fluide de lavage 9 projetée sur la zone prédéterminée Z, en ciblant la zone Z lorsque le bras d'actionnement 31 portant l'orifice d'arrosage dédié 81, pivote au plus près de la zone Z.

## Revendications

1. Balai d'essuie-glace pour système d'essuyage d'une surface vitrée de véhicule automobile, destiné à être entrainé en pivotement par un bras d'actionnement (3) d'un système d'essuyage (1), le balai d'essuyage comportant au moins un orifice d'arrosage dédié (8) configuré pour projeter du fluide de lavage (9) sur une zone prédéterminée (Z) de la surface vitrée (2) à l'arrière de laquelle un capteur (10) est agencé, ledit orifice d'arrosage dédié (8) étant agencé au niveau d'une portion du balai d'essuie-glace (P) balayant ladite zone prédéterminée (Z) de la surface vitrée (2), et formant une densité d'orifices d'arrosage (5, 8) plus importante au niveau de ladite portion du balai d'essuie-glace (P) que sur le reste du balai d'essuie-glace (4 ; 41) et/ou présentant une section d'ouverture plus importante que les orifices d'arrosage (5) situés en dehors de la zone prédéterminée (Z), **caractérisé en ce que** le au moins un orifice d'arrosage dédié (8) agencé dans ladite portion du balai d'essuie-glace (P) balayant ladite zone prédéterminée (Z) est situé sur le côté opposé du côté du balai d'essuie-glace sur lequel est ménagé au moins un orifice d'arrosage (5) destiné à projeter du fluide de lavage (9) sur la surface vitrée (2).

2. Balai d'essuie-glace selon la revendication précédente, **caractérisé en ce que** le au moins un orifice d'arrosage dédié (8) est configuré pour projeter un fluide de lavage (9) sur ladite zone prédéterminée (Z) en amont et/ou en aval du balai d'essuie-glace lorsque le balai d'essuie-glace est entraîné en pivotement.

3. Balai d'essuie-glace selon l'une des revendications 1 ou 2, **caractérisé en ce qu'** il comporte au moins une rampe d'arrosage comportant une pluralité d'orifices d'arrosage (5) s'étendant selon le long de l'axe longitudinal (L) du balai d'essuie-glace.

4. Système d'essuyage d'une surface vitrée de véhicule automobile, comprenant au moins un bras d'actionnement (3), une surface vitrée (2) et un capteur (10),**caractérisé en ce qu'** il comporte un balai d'essuie-glace selon l'une des revendications 1 à 3 entrainé en pivotement par le bras d'actionnement (3).

5. Système d'essuyage selon la revendication précédente, **caractérisé en ce qu'**il comporte un dispositif de commande du fluide de lavage (13) configuré pour projeter du fluide de lavage (9) par le au moins un orifice d'arrosage dédié (8 ; 81) en fonction du sens de pivotement ou de la position angulaire du balai d'essuie-glace (4) ou du bras d'actionnement (3 ; 31).

6. Système d'essuyage selon l'une des revendications 4 ou 5, **caractérisé en ce qu'** il comporte un dispositif de commande du pivotement des balais d'essuie-glace (11) configuré pour piloter au moins un balayage aller-retour additionnel de la zone prédéterminée (Z) au cours d'un cycle de balayage aller-retour de la surface vitrée (2).

7. Procédé d'essuyage d'une surface vitrée de véhicule automobile par balai d'essuie-glace, **caractérisé en ce qu'**on projette par au moins un orifice d'arrosage dédié (8 ; 81), un fluide de lavage (9) sur une zone prédéterminée (Z) de la surface vitrée (2) à l'arrière de laquelle un capteur (10) est agencé depuis un système d'essuyage selon l'une des revendications 4 à 6.

8. Procédé d'essuyage selon la revendication précédente, **caractérisé en ce que** le fluide de lavage (9) est projeté par le au moins un orifice d'arrosage dédié (8 ; 81) seulement au cours d'une portion du cycle de balayage aller-retour de la surface vitrée.

9. Procédé d'essuyage selon la revendication précédente, **caractérisé en ce que** le fluide de lavage (9) est projeté par le au moins un orifice d'arrosage dédié (8; 81), seulement lorsque les balais d'essuie-glace balaient la zone prédéterminée (Z).

10. Procédé d'essuyage selon l'une des revendications 8 ou 9, **caractérisé en ce que** le fluide de lavage (9) est projeté par le au moins un orifice d'arrosage dédié (8 ; 81) seulement au cours des phases montantes ou descendantes du balayage.

11. Procédé d'essuyage selon l'une des revendications 7 à 10, **caractérisé en ce qu'**un cycle de balayage aller-retour de la surface vitrée comporte au moins un balayage aller-retour additionnel de la zone prédéterminée (Z).

12. Procédé d'essuyage selon l'une des revendications 7 à 11, **caractérisé en ce qu'**au cours du cycle de balayage aller-retour de la surface vitrée, le fluide de lavage est projeté par le au moins un orifice d'arrosage dédié (8) seulement sur un côté du balai d'essuie-glace en phase montante et seulement sur le côté opposé en phase descendante, le au moins un orifice d'arrosage dédié (8) étant agencé sur le côté opposé

## Patentansprüche

1. Scheibenwischerblatt für ein System zum Wischen einer Scheibenoberfläche eines Kraftfahrzeugs, das von einem Betätigungsarm (3) eines Wischsystems (1) in eine Schwenkbewegung versetzt werden soll, wobei das Wischerblatt mindestens eine spezielle Sprühöffnung (8) aufweist, die zum Spritzen der Waschflüssigkeit (9) auf eine vorbestimmte Zone (Z) der Scheibenoberfläche (2), hinter der ein Sensor (10) angeordnet ist, ausgebildet ist, wobei die spezielle Sprühöffnung (8) in einem Abschnitt des Scheibenwischerblatts (P) angeordnet ist, der die vorbestimmte Zone (Z) der Scheibenoberfläche (2) wischt, und eine Dichte von Sprühöffnungen (5, 8) bildet, die in dem Abschnitt des Scheibenwischerblatts (P) größer ist als an dem Rest des Scheibenwischerblatts (4, 41) und/oder einen größeren Öffnungsquerschnitt aufweist als die Sprühöffnungen (5), die sich außerhalb der vorbestimmten Zone (Z) befinden, **dadurch gekennzeichnet, dass** die mindestens eine spezielle Sprühöffnung (8), die in dem Abschnitt des Scheibenwischerblatts (P) angeordnet ist, der die vorbestimmte Zone (Z) wischt, sich auf der gegenüberliegenden Seite der Seite des Scheibenwischerblatts befindet, auf der mindestens eine Sprühöffnung (5) zum Spritzen der Waschflüssigkeit (9) auf die Scheibenoberfläche (2) angebracht ist.

2. Scheibenwischerblatt nach dem vorausgehenden Anspruch, **dadurch gekennzeichnet, dass** die mindestens eine spezielle Sprühöffnung (8) ausgebildet ist zum Spritzen einer Waschflüssigkeit (9) vor und/oder nach dem Scheibenwischerblatt auf die vorbestimmte Zone (Z), wenn das Scheibenwischerblatt in eine Schwenkbewegung versetzt wird.

3. Scheibenwischerblatt nach einem der Ansprüche 1 oder 2, **dadurch gekennzeichnet, dass** es mindestens eine Sprühleiste aufweist, die eine Vielzahl von Sprühöffnungen (5) aufweist, die sich entlang der Längsachse (L) des Scheibenwischerblatts erstrecken.

4. System zum Wischen einer Scheibenoberfläche eines Kraftfahrzeugs, das mindestens einen Betätigungsarm (3), eine Scheibenoberfläche (2) und einen Sensor (10) aufweist, **dadurch gekennzeichnet, dass** es ein Scheibenwischerblatt nach einem der Ansprüche 1 bis 3 aufweist, das von dem Betätigungsarm (3) in eine Schwenkbewegung versetzt wird.

5. Wischsystem nach dem vorausgehenden Anspruch, **dadurch gekennzeichnet, dass** es eine Vorrichtung zur Steuerung der Waschflüssigkeit (13) aufweist, die ausgebildet ist zum Spritzen der Waschflüssigkeit (9) durch die mindestens eine spezielle Sprühöffnung (8, 81) in Abhängigkeit der Schwenkrichtung oder der Winkelposition des Scheibenwischerblatts (4) oder des Betätigungsarms (3, 31).

6. Wischsystem nach einem der Ansprüche 4 oder 5, **dadurch gekennzeichnet, dass** es eine Vorrichtung zur Steuerung der Schwenkbewegung der Scheibenwischerblätter (11) aufweist, die ausgebildet ist zum Steuern mindestens eines zusätzlichen Hin-Zurück-Wischvorgangs der vorbestimmten Zone (Z) während eines Hin-Zurück-Wischvorgangs der Scheibenoberfläche (2).

7. Verfahren zum Wischen einer Scheibenoberfläche eines Kraftfahrzeugs mithilfe eines Scheibenwischerblatts, **dadurch gekennzeichnet, dass** durch mindestens eine spezielle Sprühöffnung (8, 81) über ein Wischsystem nach einem der Ansprüche 4 bis 6 eine Waschflüssigkeit (9) auf eine vorbestimmte Zone (Z) der Glasoberfläche (2) gespritzt wird, hinter der ein Sensor (10) angeordnet ist.

8. Wischverfahren nach dem vorausgehenden Anspruch, **dadurch gekennzeichnet, dass** die Waschflüssigkeit (9) nur während eines Teils des Hin-Zurück-Wischzyklus der Scheibenoberfläche durch die mindestens eine spezielle Sprühöffnung (8, 81) gespritzt wird.

9. Wischverfahren nach dem vorausgehenden Anspruch, **dadurch gekennzeichnet, dass** die Waschflüssigkeit (9) nur dann durch die mindestens eine spezielle Sprühöffnung (8, 81) gespritzt wird, wenn die Scheibenwischerblätter die vorbestimmte Zone (Z) wischen.

10. Wischverfahren nach einem der Ansprüche 8 oder 9, **dadurch gekennzeichnet, dass** die Waschflüssigkeit (9) nur während der ansteigenden oder abfallenden Wischphasen durch die mindestens eine spezielle Sprühöffnung (8, 81) gespritzt wird.

11. Wischverfahren nach einem der Ansprüche 7 bis 10, **dadurch gekennzeichnet, dass** ein Hin-Zurück-Wischzyklus der Scheibenoberfläche mindestens einen zusätzlichen Hin-Zurück-Wischvorgang der vorbestimmten Zone (Z) aufweist.

12. Wischverfahren nach einem der Ansprüche 7 bis 11, **dadurch gekennzeichnet, dass** während des Hin-Zurück-Wischzyklus der Scheibenoberfläche die Waschflüssigkeit nur auf einer Seite des Scheibenwischerblatts bei ansteigender Phase und nur auf der gegenüberliegenden Seite bei abfallender Phase durch die mindestens eine spezielle Sprühöffnung (8) gespritzt wird, wobei die mindestens eine spezielle Sprühöffnung (8) auf der gegenüberliegenden Seite angebracht ist.

## Claims

1. Windscreen wiper for a system for wiping a glazed motor vehicle surface, intended to be driven pivot-wise by an actuation arm (3) of a wiping system (1), the windscreen wiper comprising at least one dedicated sprinkling orifice (8) configured to spray washing fluid (9) onto a predetermined zone (Z) of the glazed surface (2) behind which there is a sensor (10), said dedicated sprinkling orifice (8) being arranged in a portion of the windscreen wiper (P) sweeping said predetermined zone (Z) of the glazed surface (2), and forming a greater density of sprinkling orifices (5, 8) in said portion of the windscreen wiper (P) than over the rest of the windscreen wiper (4; 41) and/or having a greater opening section than the sprinkling orifices (5) situated outside of the predetermined zone (Z), **characterized in that** the at least one dedicated sprinkling orifice (8) arranged in said portion of the windscreen wiper (P) sweeping said predetermined zone (Z) is situated on the side opposite the side of the windscreen wiper on which is formed at least one sprinkling orifice (5) intended to spray washing fluid (9) onto the glazed surface (2).

2. Windscreen wiper according to the preceding claim, **characterized in that** the at least one dedicated sprinkling orifice (8) is configured to spray a washing fluid (9) onto said predetermined zone (Z) upstream and/or downstream of the windscreen wiper when the windscreen wiper is being driven pivot-wise.

3. Windscreen wiper according to one of Claims 1 or 2, **characterized in that** it comprises at least one sprinkling boom comprising a plurality of sprinkling orifices (5) extending along the longitudinal axis (L) of the windscreen wiper.

4. System for wiping a glazed motor vehicle surface, comprising at least one actuation arm (3), a glazed surface (2) and a sensor (10), **characterized in that** it comprises a windscreen wiper according to one of Claims 1 to 3 driven pivot-wise by the actuation arm (3) .

5. Wiping system according to the preceding Claim, **characterized in that** it comprises a washing fluid control device (13) configured to spray washing fluid (9) through the at least one dedicated sprinkling orifice (8; 81) according to the pivoting direction or the angular position of the windscreen wiper (4) or of the actuation arm (3; 31).

6. Wiping system according to one of Claims 4 or 5, **characterized in that** it comprises a windscreen wiper pivoting control device (11) configured to drive at least one additional forward and backward sweep of the predetermined zone (Z) during a forward and backward sweep cycle of the glazed surface (2).

7. Method for wiping a glazed motor vehicle surface by a windscreen wiper, **characterized in that** a washing fluid (9) is sprayed through at least one dedicated sprinkling orifice (8; 81) onto a predetermined zone (Z) of the glazed surface (2) behind which there is a sensor (10) from a wiping system according to one of Claims 4 to 6.

8. Wiping method according to the preceding claim, **characterized in that** the washing fluid (9) is sprayed through the at least one dedicated sprinkling orifice (8; 81) only during a portion of the forward and backward sweep cycle of the glazed surface.

9. Wiping method according to the preceding claim, **characterized in that** the washing fluid (9) is sprayed through the at least one dedicated sprinkling orifice (8; 81), only when the windscreen wipers sweep the predetermined zone (Z).

10. Wiping method according to one of Claims 8 or 9, **characterized in that** the washing fluid (9) is sprayed through the at least one dedicated sprinkling orifice (8; 81) only during upward or downward phases of the sweep.

11. Wiping method according to one of Claims 7 to 10, **characterized in that** a forward and backward sweep cycle of the glazed surface comprises at least one additional forward and backward sweep of the predetermined zone (Z).

12. Wiping method according to one of Claims 7 to 11, **characterized in that** during the forward and backward sweep cycle of the glazed surface, the washing fluid is sprayed through the at least one dedicated sprinkling orifice (8) only on one side of the windscreen wiper in the upward phase and only on the opposite side in the downward phase, the at least one dedicated sprinkling orifice (8) being arranged on the opposite side.
